# DEMANDE DE BREVET EUROPEEN

(11) **EP 0 845 519 A1**
(43) Date de publication de la demande: **03.06.1998**
(21) Numéro de dépôt: 97402778.1
(22) Date de dépôt: 19.11.1997
(51) Int. Cl.: C09K 5/04

(54) **Utilisation de mélanges à base de difluorométhane et de pentafluoroéthane comme fluides frigorigènes en réfrigération tres basse température**

(30) Priorité: 27.11.1996 FR 9614545
(71) Demandeur: ELF ATOCHEM S.A., 92800 Puteaux, Hauts-de-Seine (FR)
(72) Inventeur: Macaudiere, Sylvie, 92600 Asnières (FR)

(57) **Abrégé**

Pour remplacer le bromotrifluorométhane (R-13B1) en réfrigération très basse température, l'invention propose d'utiliser un mélange contenant en masse 25 à 50 % de difluorométhane et 50 à 75 % de pentafluoroéthane.

Un troisième composant peut être incorporé à ce mélange.

## Description

La présente invention concerne le domaine de la réfrigération et a plus particulièrement pour objet l'emploi de mélanges de fluides frigorigènes à bas point d'ébullition, n'ayant pas ou peu d'action sur l'environnement, pour remplacer les bromofluorocarbures (BCF) dans les systèmes de réfrigération très basse température (température d'évaporation inférieure à -45°C).

Dans le domaine de la basse et très basse température, les chlorofluorocarbures (CFC) ou hydrochlorofluorocarbures (HCFC) étaient largement utilisés. Ainsi, le R-22 (chlorodifluorométhane) et le R-502 (azéotrope du chlorodifluorométhane et du chloropentafluoroéthane) avec des systèmes mono- ou bi-étagés permettaient d'atteindre des températures allant jusqu'à -35°C alors que le R-13 (chlorotrifluorométhane) et le R-503 (azéotrope du trifluorométhane et du chlorotrifluorométhane) avec des systèmes en cascade (à deux compresseurs) permettaient de descendre jusqu'à -80°C.

Dans ces cas, grâce à des propriétés thermodynamiques proches de celles des CFC, les hydrofluorocarbures (HFC) tels que les HFC-23 (trifluorométhane), HFC-1 16 (hexafluoroéthane), HFC-32 (difluorométhane), HFC-125 (pentafluoroéthane), HFC-143a (1,1,1-tétrafluoroéthane), et HFC-134a (1,1,1,2-tétrafluoroéthane), purs ou en mélange, ont permis de mettre au point des substituts.

Toutefois, un fluide s'était développé dans le passé pour faire la transition entre les deux configurations précédentes. Il s'agit d'un bromofluorocarbure (BFC), à savoir le bromotrifluorométhane (R-13B1) qui permettait, avec un seul compresseur, d'obtenir des températures de -60°C avec un système mono- ou bi-étagé.

Comme les CFC, le R-13B1 a été réglementé par le Protocole de Montréal du fait de son action importante sur l'ozone et il est désormais interdit de production depuis le 1er janvier 1996.

Parmi les HFC actuellement disponibles, aucun ne présente des propriétés proches de celles du R-13B1 comme le montre le tableau ci-après. En particulier, aucun ne présente un point d'ébullition voisin de celui du R-13B1 ce qui permettrait de descendre à des températures proches de -60°C :

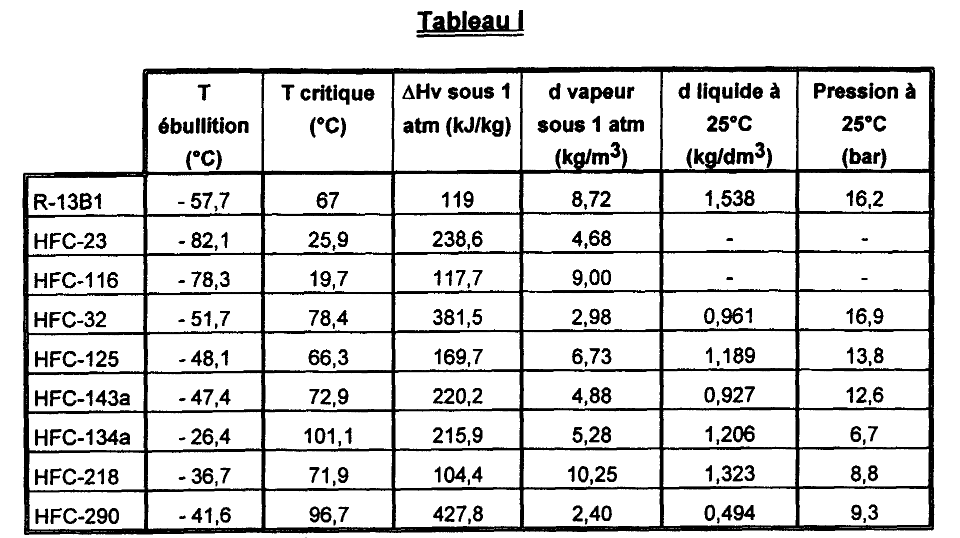

Le HFC-116 est le fluide le plus proche du R-13B1 mais son point critique trop faible (< 20°C) ne permet pas son utilisation dans des systèmes mono-étagés à température de condensation supérieure à 30°C.

Pour les autres HFC ayant des températures critiques plus élevées, leurs propriétés thermodynamiques et, pour certains, leur inflammabilité font qu'aucun corps pur ne peut remplacer le R-13B1.

La présente invention a donc pour objet de foumir une solution au remplacement du R-13B1 par le biais de mélanges à bas point d'ébullition et ininflammables contenant au moins deux hydrofluorocarbures.

Il a maintenant été trouvé que des mélanges contenant en masse 50 à 75 % de HFC-125 et 25 à 50 % de HFC-32 sont des substituts susceptibles de remplacer le R-13B1.

Les mélanges préférés sont ceux qui contiennent en masse de 65 à 75 % de HFC-125 et 25 à 35 % de HFC-32. Parmi les mélanges selon l'invention, un mélange tout particulièrement préféré contient environ 68 % de HFC-125 et 32 % de HFC-32.

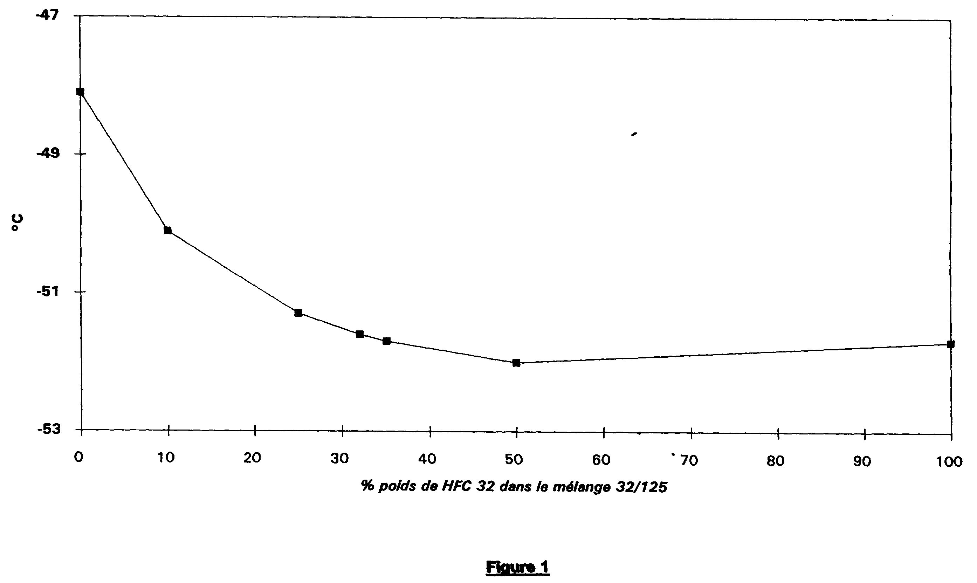

Pour le remplacement du R-13B1, le point d'ébullition est un critère très important. L'examen de la figure 1 annexée qui donne la température d'ébullition sous 1 atm de mélanges 32/125 en fonction de la teneur en HFC 32 montre que les mélanges 32/125 selon l'invention permettent d'obtenir un point d'ébullition inférieur à -51°C, donc assez proche de celui du R-13B1.

On observe que, pour des teneurs supérieures à 20 % de HFC-32, la température d'ébullition reste stable (écart inférieur à 1K).

D'autre part, les mesures d'inflammabilité de mélanges 32/125 à différentes températures (25 et 100°C) sous pression atmosphérique selon la norme ASTM E 681-85 montrent que, pour des teneurs inférieures à 50 % de HFC-32, les mélanges sont ininflammables.

Les mélanges HFC-32/125 selon l'invention sont des mélanges quasi azéotropiques, c'est-à-dire qu'ils présentent un faible écart de pression entre le point de bulle et de rosée (<1 %) et qu'ils possèdent une tension de vapeur très proche de celle du R-13B1.

Le tableau Il rassemble les données pour un mélange contenant en masse environ 68 % de HFC-125 et 32 % de HFC-32.

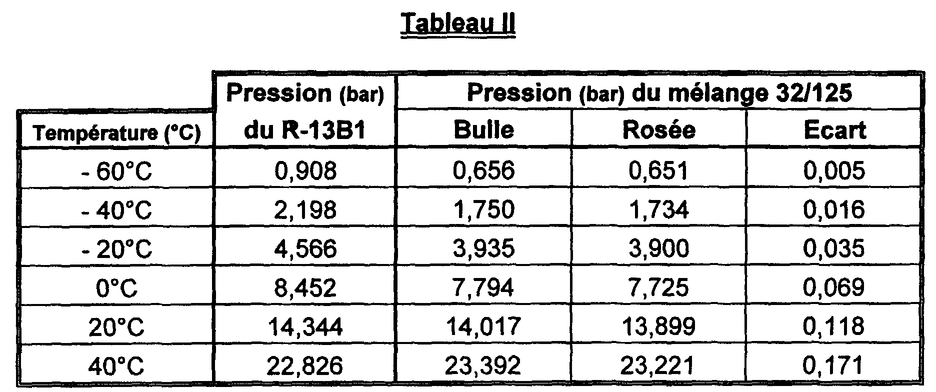

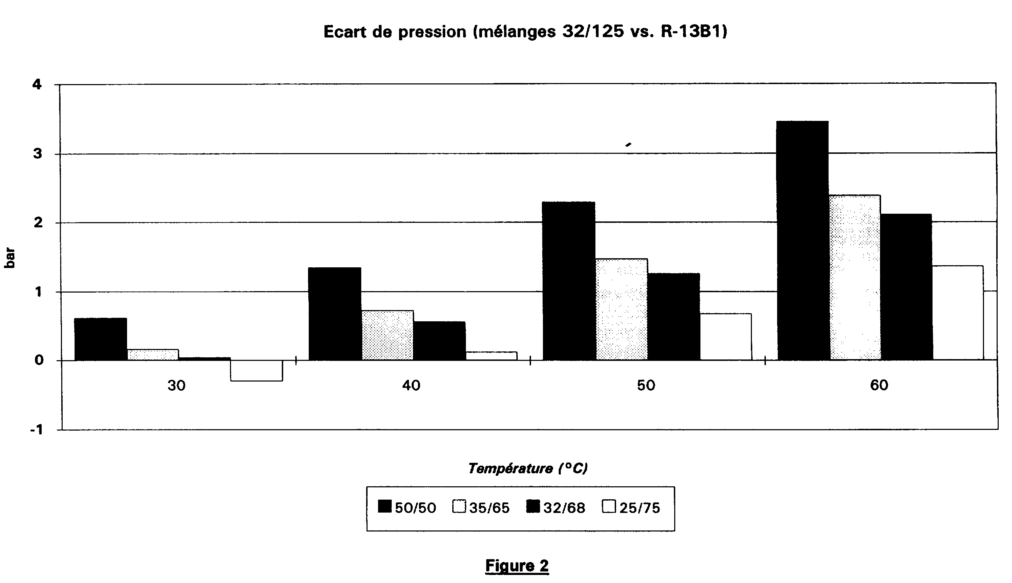

Le tableau III rassemble les données à 40°C pour des mélanges 32/125 à différentes compositions et la figure 2 montre les écarts de pression avec le R-13B1 à différentes températures.

**Tableau III**

| **Mélange 32/125 % poids** | **Pression bulle (bar)** |
|---|---|
| 50/50 | 24,17 |
| 35/65 | 23,55 |
| 32/68 | 23,39 |
| 30/70 | 23,27 |
| 25/75 | 22,95 |
| **R-13B1** | **22,83** |

La tension de vapeur à haute température est un facteur important pour une installation frigorifique. En effet, dans des systèmes à condensation à air, les températures de condensation peuvent atteindre 40 à 50°C. Or, le matériel existant a été conçu pour des pressions correspondant à celles du R-13B1. Dans ces conditions, une augmentation de pression trop importante n'est pas acceptable par le système. Les mélanges selon l'invention contenant 25 à 50 % en poids de HFC-32 permettent d'obtenir un bas point d'ébullition sans engendrer des pressions de refoulement trop importantes.

Il a d'autre part été trouvé qu'il est possible d'ajouter un ou deux composés cités dans le tableau I aux mélanges binaires 32/125. On peut citer en particulier le HFC-23 et le HFC-143a formant ainsi des mélanges temaires pour la même application. Le tableau IV ci-après montre que l'addition d'un troisième composant (X) tel que le HFC-23 ou le HFC-143a aux mélanges 32/125 permet d'obtenir des points d'ébullition encore plus proches de celui du R-13B1 (Eb. = -57,7°C).

**Tableau IV**

| **Mélange HFC-32/HFC-125/X** | | **Température d'ébullition (°C)** |
|---|---|---|
| **X** | **% poids** | |
| HFC-23 | 25/63/12 | -59,5 |
| HFC-23 | 30/65/5 | -55,1 |
| HFC-23 | 40/52/8 | -56,5 |
| HFC-23 | 31,5/58,5/10 | -57,9 |
| HFC-143a | 22,5/67,5/10 | -51,1 |
| HFC-143a | 45/45/10 | -52,1 |
| HFC-143a | 31,5/58,5/10 | -51,6 |
| HFC-143a | 20/60/20 | -50,9 |
| HFC-143a | 40/40/20 | -52,1 |

Les exemples suivants illustrent l'invention sans la limiter.

### EXEMPLE 1

Les résultats présentés ci-après ont été obtenus sur un cryothermostat conçu pour fonctionner au R-13B1.

Après obtention d'une ligne de base avec ce dernier, des mélanges 32/125 et 32/125/23 selon l'invention ont été testés sur cet appareil.

Les seules modifications apportées lors du changement de fluide ont été un réglage du détendeur et une optimisation de la charge en fluide frigorigène.

Si l'on compare les densités liquide et vapeur des mélanges selon l'invention par rapport au R-13B1, on observe dans tous les cas une diminution de 55 à 65 % de la densité des vapeurs aspirées au compresseur et une diminution d'environ 30 % de la densité liquide. Il convient donc de charger l'installation avec une charge d'environ 50 % plus faible que celle du R-13B1 et de fermer le détendeur jusqu'à l'alimentation correcte de l'évaporateur.

A titre d'exemple, les résultats d'optimisation effectués avec un mélange 32/125/23 contenant 26/63/11 % en poids sont donnés dans le tableau V. L'essai consiste en une descente en température du bain réfrigérant. La température du bain ainsi que les hautes et basses pressions ont été mesurées tout au long de l'essai.

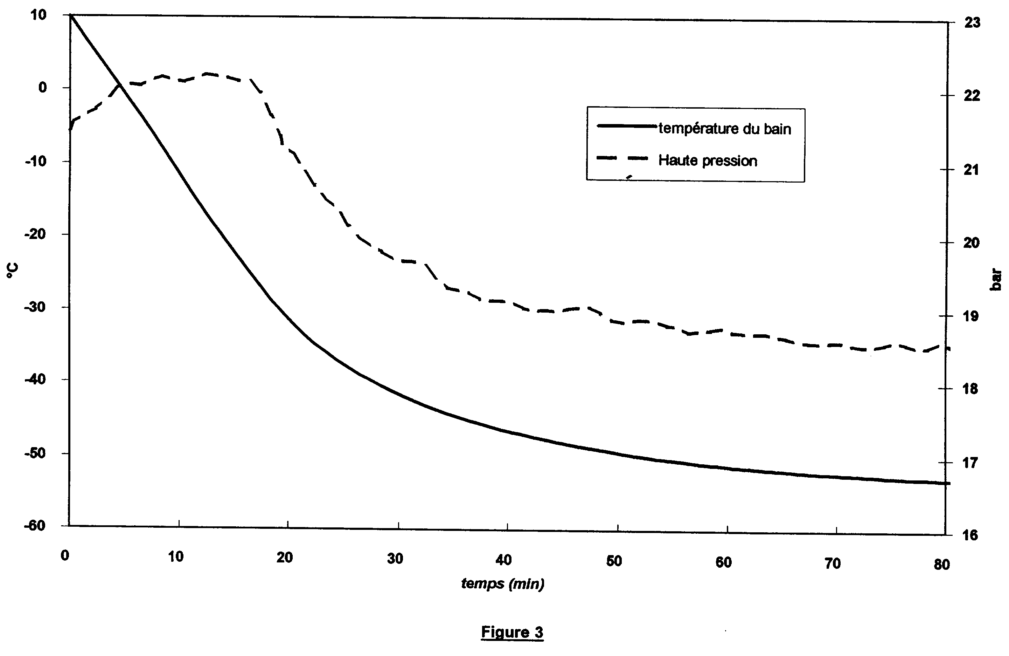

Comme le montre la figure 3 annexée qui représente l'évolution de la température du bain et de la pression de condensation en fonction du temps, on observe deux phases de fonctionnement. La première phase jusqu'à environ -30°C) s'effectue à vitesse de refroidissement et pression constantes.

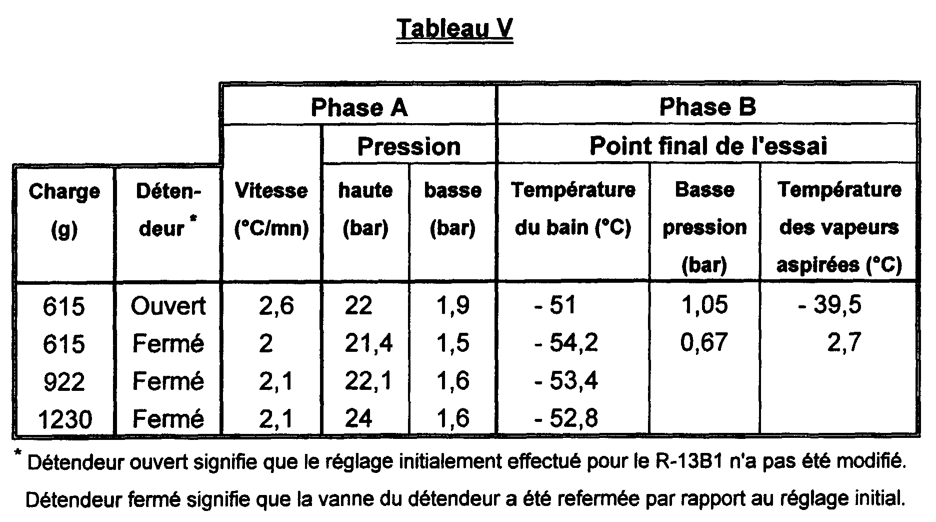

Dans le cas du détendeur réglé pour le R-13B1, on observe une basse pression trop élevée et une température des vapeurs à l'aspiration du compresseur trop faible, indiquant ainsi une alimentation trop importante de l'évaporateur.

A l'inverse, si l'installation est chargée avec la même charge que celle du R-13B1 (à savoir 1,2 kg), on observe une augmentation de la haute pression indiquant un condenseur trop alimenté.

### EXEMPLE 2

Les performances thermodynamiques de différents mélanges selon l'invention, comparées au R-13B1, ont été testées sur un cryothermostat sans modification majeure du système hormis l'optimisation de la charge en fluide frigorigène et la fermeture de la vanne de détente.

Le tableau VI résume les performances thermodynamiques observées lors d'essai de descente en température du bain réfrigérant avec le R-13B1 et avec différents mélanges de HFC-32, HFC-125 et HFC-23 pour une température ambiante de 23 ± 1°C.

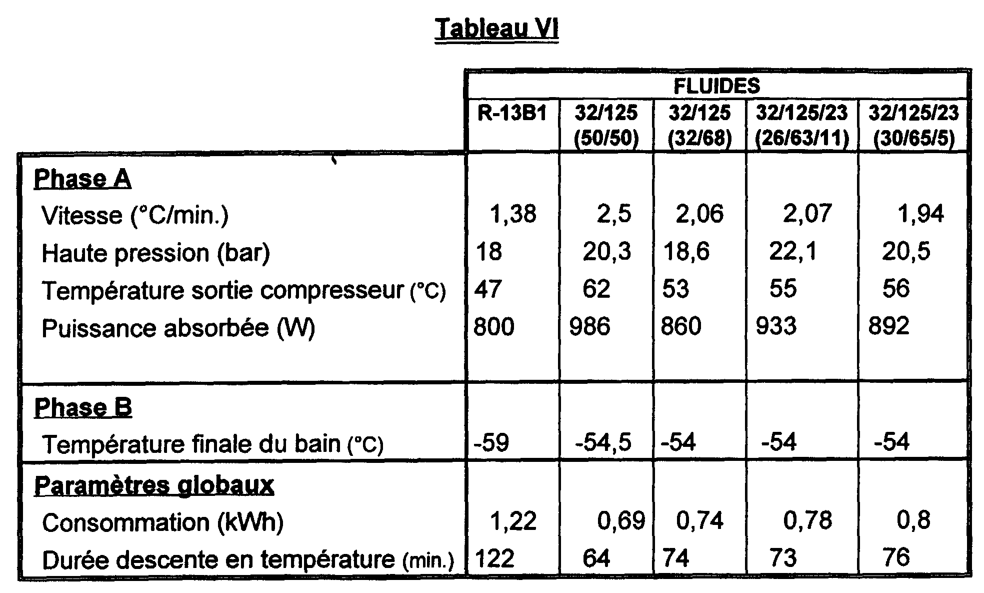

La phase A correspond à la phase stationnaire où vitesse de refroidissement et haute pression sont constantes : ceci correspond à une descente en température du bain de 10 à -30°C.

La phase B correspond à la descente en température de -30°C à la température finale atteinte.

Les mélanges selon l'invention permettent d'obtenir des températures de bain réfrigérant de l'ordre de -54°C avec un système mono-étagé initialement prévu pour fonctionner au R-13B1.

Bien qu'ayant une puissance absorbée par le compresseur plus forte que celle du R-13B1, les mélanges selon l'invention, du fait de leur vitesse de refroidissement plus importante, permettent un gain énergétique global d'environ 40 %.

Les mélanges selon l'invention contenant 25 à 50 % de HFC-32 en masse et 50 à 75 % de HFC-125 ainsi que ceux contenant éventuellement une teneur inférieure à 12 % de HFC-23 ou à 20 % de HFC-143a permettent de substituer le R-13B1 dans les systèmes de réfrigération très basse température.

Le mélange contenant environ 32 % en masse de HFC-32 et 68 % en masse de HFC-125 est le meilleur compromis pour la substitution du R-13B1.

## Revendications

1. Utilisation d'un mélange contenant en masse 25 à 50 % de difluorométhane et 50 à 75 % de pentafluoroéthane, comme fluide frigorigène en réfrigération très basse température.

2. Utilisation selon la revendication 1 dans laquelle le mélange contient en masse 25 à 35 % de difluorométhane et 65 à 75 % de pentafluoroéthane.

3. Utilisation selon la revendication 1 dans laquelle le mélange contient en masse environ 32 % de difluorométhane et 68 % de pentafluoroéthane.

4. Utilisation selon la revendication 1 ou 2 dans laquelle le mélange contient en outre jusqu'à 12 % en masse de trifluorométhane.

5. Utilisation selon la revendication 1 ou 2 dans laquelle le mélange contient en outre jusqu'à 20 % en masse de 1,1,1-trifluoroéthane.
